# EUROPÄISCHE PATENTSCHRIFT

(11) **EP 0 642 383 B1**
(45) Veröffentlichungstag und Bekanntmachung des Hinweises auf die Patenterteilung: **10.03.1999**
(21) Anmeldenummer: 93912801.3
(22) Anmeldetag: 27.05.1993
(51) Int. Cl.: B01J 2/00, B01J 2/16, A23K 1/00

(54) **VERFAHREN UND VORRICHTUNG ZUM ERZEUGEN EINES GRANULATES AUS PULVERFÖRMIGEM MATERIAL**
PROCESS AND DEVICE FOR PRODUCING GRANULATES FROM POWDERY MATERIAL
PROCEDE ET DISPOSITIF DE FABRICATION D'UN GRANULAT A PARTIR D'UNE MATIERE PULVERULENTE

(30) Priorität: 30.05.1992 DE 4217971
(43) Veröffentlichungstag der Anmeldung: 15.03.1995
(73) Patentinhaber: BOEHRINGER INGELHEIM VETMEDICA GMBH, 55216 Ingelheim (DE)
(72) Erfinder: SCHLEICHER, Werner, D-6530 Bingen (DE); LEINER, Stefan, D-6551 Gutenberg (DE); BEDNAREK, Detlef, D-6535 Gau-Algesheim (DE); HASSEL, Bernhard, D-6531 Appenheim (DE); SPÄTH, Philipp, D-6507 Ingelheim (DE)
(74) Vertreter: Fuchs Mehler Weiss & Fritzsche
(86) Internationale Anmeldenummer: EP9301328
(87) Internationale Veröffentlichungsnummer: WO9324215

(56) Entgegenhaltungen:
- EP-A- 0 195 763
- EP-A- 0 302 462
- EP-A- 0 330 207
- EP-A- 0 407 325
- US-A- 3 382 093

## Beschreibung

Die Erfindung betrifft ein Verfahren zum aufbauenden Granulieren eines pulverförmigen Materials und Umhüllen des Granulates in einem Wirbelbett mit einem in einer Granulierflüssigkeit enthaltenen Bindemittel, bei dem das pulverförmige Material in einer Wirbelbettapparatur durch einen von unten durch einen Siebboden eingeblasenen Gasstrom zumindest in Teilbereichen seiner Schüttung fluidisiert und in fluidisierte Zonen des Materials die Granulierflüssigkeit eingesprüht wird. Die Erfindung betrifft ferner eine Vorrichtung zum Durchführen eines solchen Verfahrens.

Arzneimittel, Futterzusatzstoffe und andere Erzeugnisse fallen häufig am Ende ihres eigentlichen Herstellungsprozesses als ein Pulver oder Pulvergemisch bestimmter Korngrößenverteilung an. Selbst ein für einen bestimmten Einsatz chemisch oder sonstwie anwendungsmäßig geeignetes Produkt kann manchmal unter praktischen Bedingungen seine Wirkung nicht voll entfalten oder in seiner Handhabung eingeschränkt sein, wenn es nicht in einer geeigneten äußeren Form dargeboten wird. Die Lösung von Problemen mangelnder chemischer Beständigkeit oder gefährlicher Handhabung eines pulverförmigen Materials wegen Staubbildung kann in manchen Fällen die Granulierung des pulverförmigen Materials und das eventuelle zusätzliche Überziehen der Granulatteilchen mit einem im übrigen nicht störenden Schutzstoff sein.

In der EP-A-165 577 ist für einen Zinkbacitracin enthaltenden Futtermittelzusatz dargelegt, wie ein Granulieren die chemische Beständigkeit eines solchen Futtermittelzusatzes in einer Futtermittelmischung wesentlich verbessern kann. Als bevorzugtes Verfahren zum Granulieren wird gemäß der EP-A-165 577 die Verwendung eines WirbelbettgranuliererS vorgeschlagen, in dem das pulverförmige Ausgangsmaterial vorgegeben und nach Erzeugen eines Wirbelbettes durch Einblasen eines Gasstromes durch einen Siebboden, auf dem die Ausgangssubstanz ruht, mittels Sprühdüsen eine Granulierflüssigkeit in das Wirbelbett eingesprüht wird, welche in Lösung oder Suspension 1-10 Gew.-% eines geeigneten Bindemittels enthält, das eine zunehmende Agglomeration des pulverförmigen Materials zu einem Granulat herbeiführt und dieses schließlich noch mit einer Schutzschicht überzieht.

Während es beim Gegenstand der EP-A-165 577 im wesentlichen auf die Verbesserung der chemischen Beständigkeit eines Zinkbacitracin enthaltenden Futtermittelzusatzes in einer Futtermischung ankam, beschreibt die Ep-A-302 462 ein verbessertes Granulierverfahren allgemein für Futtermittelzusätze, bei dem zum Granulieren eine Spaltkreisel-Dynamikfilter-Granulier-Apparatur verwendet wird. Eine solche Apparatur ist in der DE-A-29 32 803, auf die in der EP-A-302 462 auch Bezug genommen wird, und in einer etwas anderen Ausführung in der späteren EP-A-331 111 beschrieben. Es handelt sich dabei um eine Wirbelbettapparatur, bei der in der Windkammer unter dem Siebboden ein Rotor angeordnet ist, der das Einblasen des Fluidisiergases nur in bestimmten, sich radial erstreckenden Zonen zuläßt, die sich durch die Drehung des Rotors langsam fortbewegen, so daß nur in bestimmten kreissektorartigen Abschnitten Wirbelbettbereiche entstehen, die langsam durch die Materialschüttung wandern.

Während bei der Apparatur gemäß der DE-A-29 32 803 nur eine einzige zentral über dem Siebboden angeordnete Sprühdüse vorgesehen ist, die von unten die Coating- bzw. Granulierflüssigkeit in das Wirbelbett einsprüht, sind bei der Apparatur gemäß der EP-A-331 111 über dem Siebboden radiale Arme mit nach oben gerichteten Sprühdüsen vorgesehen, die mit dem Spaltkreiselrotor synchron rotieren, so daß sie mit den fluidisierten Wirbelbettzonen mitwandern und in diese jeweils von unten die Granulierflüssigkeit einsprühen.

In der EP-A-302 462 ist wiederum am Beispiel eines Zinkbacitracin enthaltenden Futtermittelzusatzes dargelegt, daß das in der Spaltkreisel-Wirbelbett-Apparatur erzeugte Granulat nicht nur eine noch bessere chemische Beständigkeit aufweist, sondern darüber hinaus eine sehr enge und gleichmäßige Korngrößenverteilung des Granulats, welches kaum Übergrößenteilchen enthält und praktisch staubfrei ist. Der in einem Abriebtest erzeugte Staub enthält darüber hinaus kaum einen Anteil an dem Wirkstoff Zinkbacitracin.

Wie sich aus den Ausführungsbeispielen der EP-A-302 462 ergibt, wurden dort Chargen in der Größenordnung von 3 kg Ausgangsmaterial verarbeitet. Futtermittelzusätze werden im Tonnenmaßstab benötigt. Um eine wirtschaftliche Herstellung zu ermöglichen, ist es wünschenswert, Granulierungen in Ansätzen von mehreren hundert Kilogramm bis zu einer Tonne durchzuführen.

Der Erfindung liegt die Aufgabe zugrunde, ein Verfahren zum aufbauenden Granulieren von pulverförmigem Material und Umhüllen des Granulats sowie eine entsprechende Vorrichtung bereitzustellen, die insbesondere im technischen Maßstab zu einem gleichmäßigen und im wesentlichen staubfreien Granulat führen, welches in seinen Eigenschaften den Ergebnissen aus der EP-A-302 462 entspricht.

Es ist dem Fachmann geläufig, daß das strömungstechnische Verhalten von Stoffen stark von den äußeren Bedingungen auch der verwendeten Apparatur abhängt. Dies trifft in jedem Falle auch für Granulierverfahren mit Wirbelbettapparaturen zu. Die Versuche wurden mit einer Wirbelbettapparatur mit einem Durchmesser von etwa 2 m durchgeführt, wobei die Chargen an pulverförmigem Material etwa 750 kg betrugen. Es wird aber angenommen, daß die erzielten Ergebnisse analog auch auf Apparaturen anderer Größenordnung übertragbar sind. Die Versuche erfolgten auch in diesem Fall mit einem Zinkbacitracin enthaltenden Futtermittelzusatz, dessen Zusammensetzung und sonstige Bedingungen der EP-A-165 577 und der EP-A-302 462 entnommen werden können, auf die ausdrücklich Bezug genommen wird. Auch wenn die durchgeführten Versuche vornehmlich darauf abzielten, einen Zinkbacitracin enthaltenden Futtermittelzusatz im großtechnischen Maßstab mit vorgegebenen Eigenschaften zu granulieren, ist die vorliegende Erfindung nicht auf einen solchen Futtermittelzusatz beschränkt, sondern ist allgemein für das Granulieren pulverförmigen Materials geeignet, in dem Umfang an Ausgangsstoffen und Granulierflüssigkeiten, wie er sich aus der EP-A-302 462 ergibt, auf die aus diesem Grunde auch ausdrücklich Bezug genommen wird.

Von besonderem Interesse sind auch Cimaterol, Sputolysin, Bisolvon, Virginiamycin, Tylosin, Spiramycin, Nosiheptid, Penicilline, Chlortetracycline, Oxytetracycline, Tetracycline, Erythromycine, Furazolidon, Nitrofüran, Thrimethoprim, Sulfonamide, Dimetridazol, Neomycin-Base und alle pharmazeutisch bzw. lebensmittelrechtlich zugelassenen Vitamine - wie z.B. Vitamin A, A₁, A₂, B₁, B₂, B₄, B₆, B₁₂, C (Ascorbinsäure), Ascorbylpalmitat und weitere pharmakologisch verträgliche Derivate der Ascorbinsäure, D, D₁, D₂, D₃, D₄, E, H, K, K₁, K₂, P und Q - oder Wirkstoffe - wie z.B. Avoparcin, Flavopholipol, Monensin, Monensin-Natrium, Salinomycin, Carbadox, Nitrovin und Olaquindox.

Die gestellte Aufgabe zur Verbesserung eines Verfahrens der eingangs genannten Art wird erfindungsgemäß dadurch gelöst, daß die Granulierflüssigkeit mittels wenigstens einer Flachstrahldüse im wesentlichen im Gegenstrom zu dem das Wirbelbett bildenden Gasstrom in fluidisierte Zonen des Materials eingesprüht wird, wobei die Flachstrahldüse über das Wirbelbett wandert. Eine Wirbelbettapparatur, die zum Durchführen des erfindungsgemäßen Verfahrens geeignet ist, ist entsprechend dadurch gekennzeichnet daß die mindestens eine Sprühdüse eine Flachstrahldüse ist, die mit ihrer Sprührichtung im wesentlichen nach unten im Gegenstrom zu dem das Wirbelbett bildenden Gasstrom ist.

Es hat sich im technischen Maßstab in einer größeren Apparatur gezeigt, daß ein Einsprühen der Granulierflüssigkeit von unten, d.h. vom Siebboden aus nach oben in die fluidisierten Materialzonen offensichtlich nicht der optimale Weg ist. Insbesondere bei nur in Teilbereichen ausgebildetem Wirbelbett, wie nach dem Spaltkreiselverfahren` scheint das Fluidisiergas die im Gleichstrom eingeblasene Granulierflüssigkeit nach oben mitzunehmen, so daß sie nicht in optimalen Kontakt mit dem zu agglomerierenden Material gelangt. Es hat sich daher als wirkungsvoller erwiesen, die Granulierflüssigkeit von oben, quasi im Gegenstrom, zum Fluidisiergas in die fluidisierten Bereiche einzusprühen. Die beste Wirkung wurde hierbei weiterhin mit Flachstrahldüsen erzielt, die bei einem Behälter mit kreisförmigem Querschnitt vorzugsweise so ausgerichtet sind, daß die langgestreckte, vom Strahl erfaßte Fläche mit ihrer langen Hauptachse im wesentlichen in Richtung eines Radiusstrahles der Vorrichtung verläuft.

Als wirksamste Düsen haben sich zweikomponenten-Flachstrahldüsen mit Außenmischung erwiesen, bei denen die zu zerstaubende Flüssigkeit nach Austritt aus der Düse durch einen Hilfsgasstrom zerstäubt und in die gewünschte Strahlform gebracht wird. Die Ursachen für die vorteilhafte Wirkung dieser Düsen konnten nicht bis ins einzelne geklärt werden, vermutlich wird aber trotz des Hilfsdruckes des Zerstäubungsgases ein weicher, gut verteilter Strahl mit einer Tröpfchendynamik erzeugt, die in Zusammenwirken mit dem aufgewirbelten, pulverförmigen Material einen besonders gleichmäßigen Agglomerationseffekt erzeugt.

Es hat sich ferner gezeigt, daß es bei der Verteilung einer geeigneten Anzahl von Flachstrahldüsen über dem Wirbelbett im allgemeinen nicht mehr erforderlich ist, sich des rotierenden Spaltkreisels zu bedienen, d.h., begrenzte Wirbelbettbereiche zu erzeugen, die langsam durch die Vorrichtung rotieren. Gute Ergebnisse wurden fast gleichermaßen mit einem voll mit Fluidisiergas beaufschlagten Siebboden erzielt.

In der Wahl der Anzahl der Düsen ist man insofern nicht frei, als eine begrenzte Menge von Granulierflüssigkeit in eine Materialcharge einzusprühen ist, wobei sich das Einsprühen über einen bestimmten Zeitraum erstrecken muß, um ein langsames Agglomerieren und Granulieren zu erzielen, wobei das Fluidisiergas auch in der Lage sein muß, das Lösungs- bzw. Suspensionsmittel der Granulierflüssigkeit zu entfernen. Da andererseits die verwendeten Düsen mit einer bestimmten Durchsatzmenge beaufschlagt werden müssen, ist es nicht möglich, die gesamte Oberfläche des Wirbelbettes zu besprühen. Vorzugsweise werden gemäß der Erfindung zu jedem Zeitpunkt nur etwa 10-25 % der Oberfläche des Wirbelbettes von den Sprühstrahlen der Düsen erfaßt. Dieser Umstand macht es erforderlich, die Düsen für eine bessere Sprühverteilung über das Wirbelbett wandern bzw. rotieren zu lassen.

Im allgemeinen wird man 2,5-30 Gew.-%, vorzugsweise 5-20 Gew.-%, bezogen auf das Endgranulat, an Bindemittel in das Produkt einbringen, wobei die Granulierflüssigkeit eine 1-30 %ige, vorzugsweise 2-10 %ige, besonders bevorzugt 5-7 %ige Lösung oder Suspension des Bindemittels ist.

In einer besonderen Verfahrensvariante ist es denkbar, zuerst den reinen Wirkstoff auf das Trägermaterial aufzusprühen und in einem zweiten Verfahrensschritt mit dem Überzugsmaterial zu überziehen. In dieser Verfahrensvariante beträgt der Gewichtsanteil des Wirkstoffs zwischen 0,01 bis 30 Gew.-% bezogen auf das Endgranulat, je nach pharmakologischer Aktivität des Wirkstoffes. Der Wirkstoff kann in Form einer Lösung - beispielsweise einer 0,01 bis 30 gew.-%igen Lösung - oder bei weniger gut löslichen Wirkstoffen auch in Form einer Suspension aufgesprüht werden. Bei der Einstellung der Konzentration der wirkstoffhaltigen Lösung sind selbstverständlich die Art des Lösungsmittels und das Löseverhalten des Wirkstoffes im Lösungsmittel mit zu berücksichtigen.

Von besonderem Interesse ist diese Verfahrensvariante bei hochaktiven Wirkstoffen, wie z.B. Clenbuterol oder Sputolysin. Als Trägerstoffe kommen beispielsweise anorganische Träger, wie z.B. Calciumcarbonat oder Dicalciumphosphat, als organische Träger z.B. Zucker wie Lactose, Lactose-Maisstärke oder Saccharose aber auch Sorbit in Betracht.

Bei den durchgeführten Versuchen mit dem Futtermittelzusatz wurden etwa 5 % Methylcellulose, bezogen auf das Endgranulat, eingesetzt, wobei als Granulierflüssigkeit eine 5 %ige wässerige Lösung der Methylcellulose vorgegeben wurde. Andere Überzugsmaterialien sind denkbar, wie sie beispielsweise in den EP-A 165 577 und 302 462 - auf die Bezug genommen wird - offenbart sind.

Von besonderem Interesse sind neben Methylcellulose, Hydroxypropylcellulose` Hydroxypropylmethylcellulose, Polyethylenglycol und wasserlösliche Stärke.

Bei 5 % Bindemitteleintrag und 5 %iger Lösung entspricht die Gesamtmenge an Granulierflüssigkeit in Litern in etwa dem Gewicht in kg des vorgegebenen pulverförmigen Materials. Zum Erzielen eines guten Ergebnisses wurde diese Flüssigkeitsmenge vorzugsweise über eine Zeit von 3-4 Stunden verteilt in das Wirbelbett eingesprüht. Dabei muß die Flüssigkeitsmenge pro Zeiteinheit nicht unbedingt über die gesamte Sprühzeit konstant gehalten werden. Es kann vielmehr zu Beginn des Prozesses etwas mehr und gegen Ende etwas weniger gesprüht werden. Bei einer Menge von etwa 1 l Granulierflüssigkeit je kg pulverförmigen Materials und einer Sprühdauer von knapp 3,5 Stunden ergibt sich eine durchschnittliche zeitliche Sprühmenge von nur etwa 5 ml/kg Ausgangsmaterial und Minute. Hieraus folgt bereits, daß die Sprühdichte an der Oberseite des Wirbelbettes nicht sehr hoch gehalten werden kann.

Für das erfindungsgemäße Verfahren geeignete Zweistoff-Flachstrahldüsen werden beispielsweise von der Firma Spraying Systems angeboten. Bei den Versuchen hat sich u.a. eine Düse dieser Firma mit der Typenbezeichnung SUE 45 als geeignet erwiesen, die einen Sprühwinkel von 45° hat. Diese Düse hat gemäß der Spezifikation des Lieferanten für den Betrieb mit Wasser bei einem Flüssigkeitsdruck von 1,5 bar und einem Luftdruck von etwa 6,0 bar einen Flüssigkeitsdurchsatz von 4,7 l/min. Bei einem Flüssigkeitszulaufdruck von 0,7 bar und einem Luftdruck von 5-6 bar sinkt der Wasserdurchsatz auf 3,2 l/min. Bei höher viskosen Flüssigkeiten, wie sie die hier in Frage kommenden Granulierflüssigkeiten darstellen, ist der Flüssigkeitsdurchsatz der Düsen erheblich geringer. Die Viskosität der Flüssigkeit kann auch noch durch deren Temperatur beeinflußt werden. Es hat sich gezeigt, daß die Düsen mit der Granulierflüssigkeit zufriedenstellend arbeiten, wenn die Viskosität der Flüssigkeit so gewählt wird, daß die Düsen den 0,1-0,3-fachen Durchsatz, vorzugsweise den 0,12-0,18-fachen Durchsatz des Nenndurchsatzes mit Wasser haben. Vorzugsweise werden die Düsen mit einem Druck des Zerstäubungsgases zwischen 2 und 6 bar betrieben. Der Flüssigkeitsdruck wird durch den gewünschten Durchsatz der Düse bestimmt. Er kann zwischen 0,7 und 3 bar variieren, vorzugsweise liegt er zwischen 1,2 und 1,8 bar. Bei einer 5 %igen Methylcelluloselösung mit einer Temperatur von 30°C beträgt dabei der Durchsatz bei dem genannten Düsentyp etwa 0,6-1,4 l/min.

Je nach Abstand einer solchen Düse von der zu besprühenden Fläche, hier der theoretischen Oberfläche des Wirbelbettes, besprüht die Düse eine Fläche von 150-750 cm², wobei eine Sprühfläche zwischen 500 und 700 cm² bevorzugt wird, für die der mittlere Abstand der Düse von der zu besprühenden Fläche etwa 70 cm beträgt. Die bevorzugte Sprühdichte, bezogen auf die wirklich besprühte Fläche, liegt vorzugsweise zwischen 5 und 15 l/m².min.

Aus der Sprühleistung der einzelnen Düsen und der pro Zeiteinheit zu versprühenden Menge an Granulierflüssigkeit ergibt sich bei Auswahl eines bestimmten Düsentyps die Anzahl der erforderlichen Düsen, wobei insbesondere durch deren Höhenanordnung sich die bevorzugte, mindestens zu besprühende Fläche ergibt. Bei einer Apparatur mit kreisförmigem Querschnitt werden die Düsen vorzugsweise so angeordnet, daß ihre Sprühfelder einen radialen Verlauf zeigen und in ihrem Abstand gleichmäßig über den Umfang verteilt sind. Reicht die Länge des Sprühfeldes einer Düse in etwa aus, um einen Behälterradius zu erfassen, wird vorzugsweise ein Düsenkranz gewählt, wobei die Düsen in etwa im halben Radiusabstand vom Mittelpunkt angeordnet sind. Bei einem Behälter mit 2 m Durchmesser konnten beispielsweise gute Ergebnisse mit sechs derart angeordneten und über den Umfang verteilten Düsen erzielt werden. Bei größerem Behälterdurchmesser kann eine höhere Anzahl von Düsen erforderlich sein, wobei die Düsen, wenn sie nicht nahezu die Länge eines Behälterradius erfassen, abwechselnd in unterschiedlichem Abstand vom Mittelpunkt des Behälters in einer Weise angeordnet sein sollten, daß möglichst eine gleichmäßige Sprühverteilung über das Wirbelbett erzielt wird. Bezogen auf die gesamte Wirbelbettfläche hat sich eine Sprühdichte zwischen 1 und 3 l/m².min, vorzugsweise zwischen 1,2 und 1,5 l/m².min als geeignet erwiesen.

Zum Erzeugen des Wirbelbettes haben sich Gasmengen im Bereich von 10-60 m³/min.m² Siebboden als geeignet erwiesen. Das erfindungsgemäße Verfahren erweist sich daher in dieser Hinsicht als besonders wirtschaftlich. Im Gegensatz zu manchen bekannten Verfahren ist es ohne besonderen Einfluß auf das erfindungsgemäße Verfahren, ob der Strom des Fluidisiergases durch den Siebboden durch einen Überdruck unter dem Siebboden oder einen Unterdruck oberhalb des Siebbodens erzeugt wird. Zum Erzeugen des Gasstromes kann daher entweder ein druckerzeugendes Gebläse am Gasraum unterhalb des Siebbodens oder ein Saugzuggebläse am Produktraum oberhalb des Wirbelbettes vorgesehen werden.

Bei der Verarbeitung des bei den Versuchen gewählten Futtermittelzusatzes konnte erfolgreich mit einer spezifischen Siebbodenbelastung von 200-300 kg des pulverförmigen Ausgangsmaterials je m² Siebbodenfläche gearbeitet werden. Als Fluidisiergas wurde im speziellen Fall mit Stickstoff gearbeitet, dessen Eintrittstemperatur in die Granuliervorrichtung in einem Temperaturbereich zwischen 90 und 110°C vorzugsweise bei 100°C lag. Das pulverförmige Material wurde vor dem Beginn des Sprühens auf eine Temperatur von oberhalb 70°C, vorzugsweise von 80°C aufgeheizt. Im folgenden wird der Grundaufbau einer Ausführungsform einer erfindungsgemäßen Wirbelbettapparatur anhand der beigefügten Zeichnungen erläutert. Darin stellen dar:
- Fig. 1: einen schematischen Vertikalschnitt durch die wesentlichen Teile der Vorrichtung und
- Fig. 2: einen schematischen Horizontalschnitt durch die Vorrichtung, in dem die Verteilung der Sprühdüsen erkennbar ist.

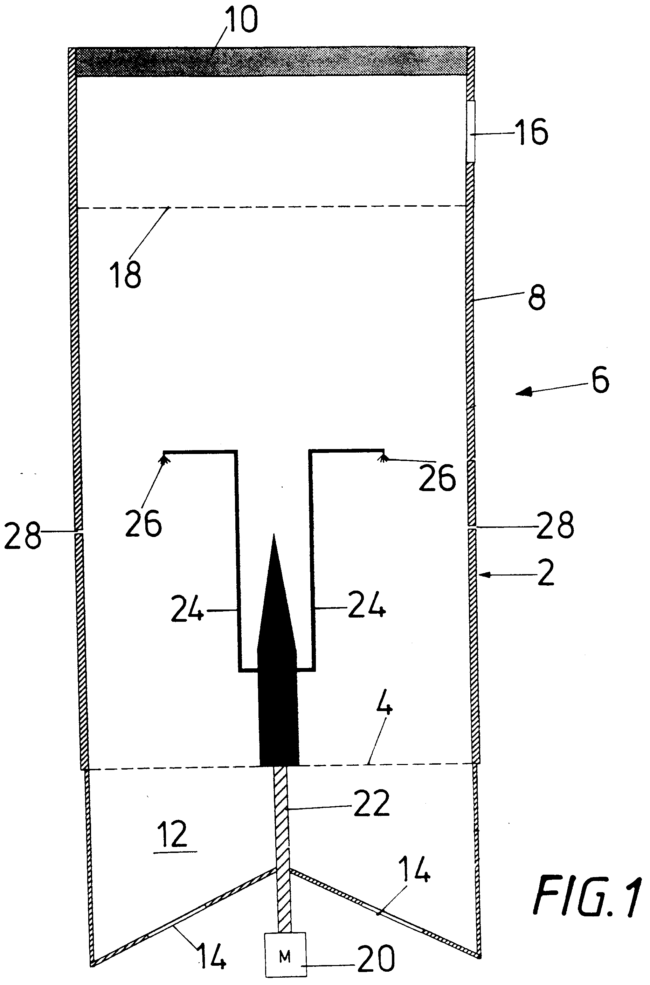

Der in Fig. 1 im schematischen Querschnitt dargestellte Wirbelbettgranulator weist einen Produktbehälter 2 für das zu granulierende pulverförmige Material auf, welcher an seinem unteren Ende durch einen feinen Siebboden 4 abgeschlossen ist, dessen Feinheitsgrad so gewählt ist, daß das von ihm zu tragende pulverförmige Material nicht zu wesentlichen Anteilen durch den Siebboden hindurchtreten kann. Über dem Produktbehälter 2 und in dessen Fortsetzung nach oben ist ein Oberteil 6 des Granulators angeordnet. Dieses Oberteil weist einen zylindrischen Außenmantel 8 auf, der an seiner Oberseite durch eine Oberwand 10 abgeschlossen ist. Unterhalb des Produktbehälters 2 bzw. von dessen Siebboden 4 ist eine Windkammer 12 angeordnet, die mit Gaseintrittsöffnungen 14 versehen ist, welche mit einem (nicht dargestellten) Gebläse in Verbindung stehen. Im Oberteil 6 der Vorrichtung befindet sich eine Gasaustrittsöffnung 16, durch die das Fluidisiergas die Vorrichtung wieder verlassen kann. Durch die gestrichelte Linie 18 im Oberteil der Vorrichtung ist schematisch ein Staubfilter angedeutet, der von dem Fluidisiergas mitgeführte Staubpartikel aus dem pulverförmigen Material zurückhalten und je nach Ausführung entweder von oben in den Produktbehälter zurückgelangen lassen oder zwecks anderer Weiterbehandlung sammeln soll.

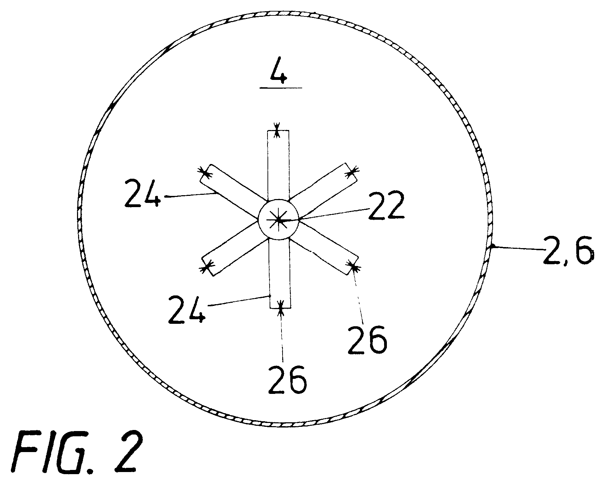

In der Mittelachse der Vorrichtung ist in deren unterem Bereich eine von einem Motor 20 angetriebene rotierbare Welle 22 vorgesehen, die von unten durch den Siebboden hindurchtritt und oberhalb des Siebbodens mit Sprüharmen 24 versehen ist, die an ihrem Ende je mit einer Zweistoff-Flachstrahldüse 26 versehen sind. Aus Fig. 2 ist zu ersehen, daß die Welle 22 mit sechs unter gleichen Winkelabständen über den Vorrichtungsumfang verteilten Sprüharmen ausgerüstet ist, die zusammen sechs Sprühdüsen tragen, die sich in ihrer Position in etwa auf dem halben Radiusabstand von der Welle 22 zur Außenwand der Vorrichtung befinden. Die Welle 22 und die Sprüharme 24 sind hohl ausgeführt, um den Düsen 26 mit (nicht dargestellten) Zuführmitteln Sprühflüssigkeit zuführen zu können.

Der Produktbehälter 2 ist in der zeichnerischen Darstellung nicht mit einer Beschickungsöffnung für das pulverförmige Material versehen, er kann vielmehr als Ganzes einschließlich des Siebbodens 4 zur Beschickung und Entladung seitlich aus der Wirbelbettapparatur herausgeführt werden, was durch die Unterbrechung 28 in der Außenwand der Vorrichtung angedeutet ist. Die Vorrichtung ist für chargenweisen Betrieb vorgesehen.

Bei der für Versuche benutzten Ausführung der Wirbelbettapparatur betrug der Durchmesser des Produktbehälters und des Oberteils ca. 2 m, was bei Abzug des Querschnittes der Welle 22 oberhalb des Siebbodens eine Siebbodenfläche von etwa 3,1 m² ergab. Als Sprühdüsen wurden Zweistoff-Flachstrahldüsen der Firma Spraying Systems, und zwar vom Typ SUE 45 eingesetzt. Die Düsen waren etwa 145 cm oberhalb des Siebbodens 4 angeordnet. Dies ergab bei einer erzeugten Wirbelbetthöhe über dem Siebboden von etwa 75 cm einen Düsenabstand von dem Wirbelbett von etwa 70 cm. Die Düsen wurden mit einem Gasdruck von etwa 4 bar betrieben. Bei einem Flüssigkeitsdruck von etwa 1,5 bar hat eine solche Düse einen Wasserdurchsatz von etwa 4,7 l/min. Bei Einsprühen einer 5 %igen, wässrigen Methylcelluloselösung beträgt der Durchsatz je Düse je nach Flüssigkeitsdruck etwa 0,6-1,4 l/min.

Der Antrieb für die Welle 22 war regelbar für Drehzahlen zwischen 0,2 und 10 U/min ausgelegt.

Mit der vorstehend beschriebenen Wirbelbettapparatur wurde ein pulverförmiger, Zinkbacitracin enthaltender Futtermittelzusatz granuliert. Ein typisches Ausführungsbeispiel ist im folgenden wiedergegeben:

### Ausführungsbeispiel

In dem Produktbehälter der vorstehend beschriebenen Wirbelbettapparatur wurden 712,5 kg eines pulverförmigen, Zinkbacitracin enthaltenden Futtermittelzusatzes vorgegeben. Das Pulver hatte eine Korngrößenverteilung von 1-40 µm, wobei der Hauptteil der Korngrößenverteilung sich in einem Bereich von 10-15 µm bewegte. Neben 5-30 Gew.-% Zinkbacitracin enthält ein solches Pulver im übrigen Fermentationsreste aus dem Herstellungsprozeß und Calciumcarbonat.

Als Fluidisiergas wurde Stickstoff verwendet. Zu Beginn des Prozesses wurde das pulverförmige Ausgangsmaterial mittels 95°C warmen Stickstoffgases etwa 20 Minuten lang bis auf 80°C erwärmt.

Für das dann einsetzende Einsprühen der Granulierflüssigkeit wurden sechs mit ihren Strahlen nach unten auf das Wirbelbett gerichtete Flachstrahldüsen verwendet, die mit einer Drehzahl von 6 U/min durch die Vorrichtung rotierten. Eingesprüht wurden insgesamt 750 l einer 5 %igen Methylcelluloselösung mit einer Temperatur von 30°C.

Zur Erzeugung des Wirbelbettes wurde Stickstoffgas von etwa 100°C in zunehmenden Mengen in die Apparatur eingeblasen, und zwar anfangs mit einer Rate von 40 m³/min und gegen Ende mit einer Rate von 187 m³/min. Die Sprührate der Granulierflüssigkeit betrug anfangs 4 l/min und wurde jeweils nach einer eingesprühten Menge von 20 l um 1 l/min erhöht, bis insgesamt auf 8 l/min. Mit Erhöhung der Sprührate wurde auch gleichzeitig die Menge an Fluidisiergas jeweils um 10 m³/min bis auf 90 m³/min erhöht. Nach dem Einsprühen von 120 l Granulierflüssigkeit wurde die Sprührate auf 4 l/min zurückgenommen und konstant gehalten. Die gesamte Sprühzeit betrug etwa 3 h.

Nach Ende des Sprühens und Waschen der Düsen mit einer gewissen Wassermenge wurde das erzeugte Granulat getrocknet. Kontrolliert wurden dabei die Produkttemperatur und die Abluftfeuchte der Trockenluft.

Die Korngrößenverteilung des Granulates war sehr gleichmäßig, der Granulatanteil von Teilchen zwischen 180 und 710 µm lag über 80 %, was der vorgegebenen Spezifikation entsprach. Im Bereich zwischen 125 und 1000 µm lagen über 98 % des Granulats. Der Feinstoffanteil von Partikeln mit weniger als 45 µm betrug 0,01 % und lag ebenfalls in der vorgegebenen Spezifikation.

Es konnte daher nach dem erfindungsgemäßen Verfahren und mit der erfindungsgemäßen Wirbelbettapparatur ein voll zufriedenstellendes Granulat erzeugt werden.

In Analogie zu dem beschriebenen Beispiel wurden ebenfalls Versuche im technischen Maßstab mit Calciumcarbonat und Lactose als Träger und weitere Versuche mit löslicher Stärke als Überzugsmaterial durchgeführt.

## Patentansprüche

1. Verfahren zum aufbauenden Granulieren eines pulverförmigen Materials und Umhüllen des Granulates in einem Wirbelbett mit einem in einer Granulierflüssigkeit enthaltenen Bindemittel, bei dem das pulverförmige Material in einer Wirbelbettapparatur durch einen von unten durch einen Siebboden eingeleiteten Gasstrom zumindest in Teilbereichen seiner Schüttung fluidisiert und die Granulierflüssigkeit von oberhalb des Wirbelbettes in fluidisierte Zonen des Materials eingesprüht wird, dadurch gekennzeichnet, daß die Granulierflüssigkeit mittels wenigstens einer Flachstrahldüse im wesentlichen im Gegenstrom zu dem das Wirbelbett bildenden Gasstrom eingesprüht wird, wobei die Flachstrahldüse über das Wirbelbett wandert.

2. Verfahren nach Anspruch 1, dadurch gekennzeichnet, daß wenigstens eine Zweistoff-Überdruck-Flachstralüdüse für Außenmischung verwendet wird, die mit einem Druck des Zerstäubungsgases von 2 bis 6 bar betrieben wird.

3. Verfahren nach Anspruch 1 oder 2, dadurch gekennzeichnet, daß mehrere gleichmäßig über die Oberfläche des Wirbelbettes verteilte Flachstrahldüsen verwendet werden.

4. Verfahren nach einem der Ansprüche 1 bis 3, dadurch gekennzeichnet, daß nur Teilbereiche der Materialschüttung fluidisiert werden und daß diese Teilbereiche und in Übereinstimmung mit ihnen die Flachstrahldüsen durch bzw. über die Materialschüttung wandern gelassen werden.

5. Verfahren nach einem der Ansprüche 1 bis 3, dadurch gekennzeichnet, daß im wesentlichen die gesamte Materialschüttung im Wirbelbett fluidisiert wird und daß die Flachstrahldüsen über das Wirbelbett wandern gelassen werden.

6. Verfahren nach einem der Ansprüche 1-5 für die Verarbeitung eines Zinkbacitracin enthaltenden Futtermittelzusatzes, dadurch gekennzeichnet, daß in der Wirbelschichtapparatur mit einer spezifischen Schüttung von 200-300 kg des Ausgangsmaterials pro m² Siebbodenfläche gearbeitet wird, und als Granulierflüssigkeit eine 4 bis 6 gew.-%ige wässrige Lösung von Methylcellulose verwendet wird.

7. Wirbelbettapparatur,
mit einem Behälter (2, 6),
einem im Behälter (2) angeordneten Siebboden (4) zum Tragen pulverförmigen Materials,
einer unterhalb des Siebbodens (4) angeordneten Einrichtung (12, 14) zum Einleiten von Fluidisierungsgas durch den Siebboden in das Material und mindestens einer oberhalb des sich ausbildenden Wirbelbettes angeordneten Sprühdüse (26) zum Einsprühen von Granulierflüssigkeit,
sowie Mitteln zum Zuleiten der Granulierflüssigkeit zu der mindestens einen Sprühdüse (26),
dadurch gekennzeichnet, daß die mindestens eine Sprühdüse (26) eine um die Mittelachse des Behälters rotierbare Flachstrahldüse ist, die mit ihrer Sprührichtung im wesentlichen nach unten, im Gegenstrom zu dem das Wirbelbett bildenden Gasstrom, gerichtet ist.

8. Wirbelbettapparatur nach Anspruch 7, dadurch gekennzeichnet, daß die mindestens eine Sprühdüse (26) eine Zweikomponenten-Überdruck-Flachstrahldüse mit Außenmischung ist.

9. Wirbelbettapparatur nach Anspruch 8, dadurch gekennzeichnet, daß die mindestens eine Flachstrahldüse (26) für einen Druck des Zerstäubungsgases von 2 bis 7 bar und für einen Druck der zu zerstäubenden Granulierflüssigkeit von 0,2 bis 3,0 bar ausgelegt ist.

10. Wirbelbettapparatur nach Anspruch 8 oder 9, dadurch gekennzeichnet, daß die mindestens eine Flachstrahldüse (26) für einen Flüssigkeitsdurchsatz, bezogen auf Wasser, von 1,5 bis 5,0 l/min ausgelegt ist.

11. Wirbelbettapparatur nach mindestens einem der Ansprüche 7 bis 10 mit einem Behälter (2, 6) mit im wesentlichen kreisförmigen Querschnitt, dadurch gekennzeichnet, daß die mindestens eine Flachstrahldüse (26) mit ihrem Sprühfeld im wesentlichen radial ausgerichtet ist, wobei sich das Sprühfeld, bezogen auf die vertikale Mittelachse (22) des Behälters, nur einseitig von dieser etwa entlang eines Radialstrahles erstreckt und die Sprühdüse (26) um die Mittelachse des Behälters rotierbar ist.

12. Wirbelbettapparatur nach Anspruch 11, dadurch gekennzeichnet, daß mehrere Flachstrahldüsen (26), vorzugsweise 6-12 Flachstrahldüsen, gleichmäßig über den Umfang des Behälters (2, 6) verteilt angeordnet sind.

13. Wirbelbettapparatur nach Anspruch 11 oder 12, dadurch gekennzeichnet, daß die Flachstrahldüsen (26) mittels Armen (24) an einer zentralen Rotationswelle (22) angebracht sind und gegebenenfalls die Zufuhr der Granulierflüssigkeit zu den Flachstrahldüsen (26) durch die hohl ausgebildete Rotationswelle (22) und die Arme (24) vorgesehen ist.

14. Wirbelbettapparatur nach einem der Ansprüche 11 bis 13, dadurch gekennzeichnet, daß unter dem Siebboden eine rotierbare Platte mit im wesentlichen radialen Luftdurchtrittsschlitzen angeordnet ist, die in Übereinstimmung mit den Flachstrahldüsen rotierbar sind.

15. Wirbelbettapparatur nach einem der Ansprüche 7 bis 10 mit einem Behälter mit im wesentlichen kreisförmigen Querschnitt, dadurch gekennzeichnet, daß mehrere Flachstrahldüsen mit im wesentlichen radiale ausgerichtetem Sprühfeld in etwa gleichem Abstand über den Umfang des Behälters verteilt sind.

16. Wirbelbettapparatur nach Anspruch 15, dadurch gekennzeichnet, daß 6 bis 12 Flachstrahldüsen vorgesehen sind.

17. Wirbelbettapparatur nach einem der Ansprüche 12 bis 16, dadurch gekennzeichnet, daß die durch die Flachstrahldüsen zu jedem Zeitpunkt erfaßte Fläche des Wirbelbettes etwa 10 bis 25 % der Gesamtfläche des Wirbelbettes beträgt.

18. Wirbelbettapparatur nach einem der Ansprüche 12 bis 17, dadurch gekennzeichnet, daß die von einer Flachstrahldüse erfaßte Oberfläche des Wirbelbettes 150 bis 750 cm², vorzugsweise 600-700 cm² beträgt.

19. Verwendung einer Wirbelbettapparatur nach einem der Ansprüche 7-18 für das aufbauende Granulieren eines pulverförmigen Materials und Umhüllen eines Granulates mit einem in einer Granulierflüssigkeit enthaltenen Bindemittel.

20. Verwendung einer Wirbelbettapparatur nach einem der Ansprüche 7-18 zum aufbauenden Granulieren eines pulverförmigen Zinkbacitracin enthaltenden Futtermittelzusatzes.

## Claims

1. Process for build-up granulation of a powdered material and coating the granules in a fluidised bed with a binder contained in a granulating liquid, wherein the powdered material is fluidised, at least in parts of its bulk, in a fluidised bed apparatus by means of a gas current introduced from below through a perforated base and the granulating liquid is sprayed from above the fluidised bed into fluidised zones of the material, characterised in that the granulating liquid is sprayed by means of at least one flat jet nozzle substantially in counter-current to the gas current which forms the fluidised bed, said flat jet nozzle migrating over the fluidised bed.

2. Process according to claim 1, characterised in that at least one two-component overpressure flat jet nozzle is used for external mixing, which is operated at a pressure of atomising gas of 2 to 6 bar.

3. Process according to claim 1 or 2, characterised in that a plurality of flat jet nozzles are used which are distributed as evenly as possible over the surface of the fluidised bed.

4. Process according to one of claims 1 to 3, characterised in that only parts of the bulk of the material are fluidised and that these parts and, together with them, the flat jet nozzles are allowed to migrate through or over the bulk material.

5. Process according to one of claims 1 to 3, characterised in that substantially all the bulk material is fluidised in the fluidised bed and the flat jet nozzles are allowed to migrate over the fluidised bed.

6. Process according to at least one of claims 1 to 5 for processing a feed additive containing zinc bacitracin, characterised in that, in the fluidised bed apparatus, a specific bulk of 200-300 kg of starting material is processed per m² of perforated base, and the granulating liquid used is a 4 to 6% by weight aqueous solution of methyl cellulose.

7. Fluidised bed apparatus having a container (2, 6), a perforated base (4) arranged in the container (2) for carrying powdered material, a device (12, 14) arranged underneath the perforated base (4) for introducing fluidising gas through the perforated base into the material and at least one spray nozzle (26) arranged above the fluidised bed formed, for spraying granulating liquid, as well as means for conveying the granulating liquid to the or each spray nozzle (26), characterised in that the or each spray nozzle (26) is a flat jet nozzle which is rotatable about the central axis of the container and which is arranged so that its direction of spraying is substantially downwards in countercurrent to the gas current which forms the fluidised bed.

8. Fluidised bed apparatus according to claim 7, characterised in that the or each spray nozzle (26) is a two-component overpressure flat jet nozzle with external mixing.

9. Fluidised bed apparatus according to claim 8, characterised in that the or each flat jet nozzle (26) is designed for a pressure of atomising gas of 2 to 7 bar and for a pressure of 0.2 to 3.0 bar in the granulating liquid which is to be atomised.

10. Fluidised bed apparatus according to claim 8 or 9, characterised in that the or each flat jet nozzle (26) is designed for a liquid throughput, based on water, of 1.5 to 5.0 l/min.

11. Fluidised bed apparatus according to at least one of claims 7 to 10, with a container (2, 6) of substantially circular cross-section, characterised in that the or each flat jet nozzle (26) is arranged with its spraying area directed substantially radially, the spraying area, based on the vertical central axis (22) of the container extending only on one side of said axis substantially along a radius, and the spray nozzle (26) being rotatable about the central axis of the container.

12. Fluidised bed apparatus according to claim 11, characterised in that a plurality of flat jet nozzles (26), preferably 6-12 flat jet nozzles, are uniformly distributed over the circumference of the container (2, 6).

13. Fluidised bed apparatus according to claim 11 or 12, characterised in that the flat jet nozzles (26) are mounted by means of arms (24) on a central rotation shaft (22) and optionally the supply of granulating liquid to the flat jet nozzles (26) is provided through the hollow rotation shaft (22) and the arms (24).

14. Fluidised bed apparatus according to at least one of claims 11 to 13, characterised in that, under the perforated base, there is a rotatable plate having substantially radial air passage slots which are rotatable in registry with the flat jet nozzles.

15. Fluidised bed apparatus according to one of claims 7 to 10 with a container of substantially circular cross-section, characterised in that a plurality of flat jet nozzles are arranged with their spray areas substantially radially aligned at substantially equal spacings over the circumference of the container.

16. Fluidised bed apparatus according to claim 15, characterised in that 6 to 12 flat jet nozzles are provided.

17. Fluidised bed apparatus according to one of claims 12 to 16, characterised in that the area of the fluidised bed covered by the flat jet nozzles at any time is about 10 to 25% of the total area of the fluidised bed.

18. Fluidised bed apparatus according to one of claims 12 to 17, characterised in that the surface of the fluidised bed covered by a flat jet nozzle is 150 to 750 cm², preferably 600-700 cm².

19. Use of a fluidised bed apparatus according to one of claims 7 to 20, for the build-up granulation of a powdered material and the coating of granules with a binder contained in a granulating liquid.

20. Use of a fluidised bed apparatus according to one of claims 7 to 18 for the build-up granulation of a powdered feed additive containing zinc bacitracin.

## Revendications

1. Procédé de fabrication de granulat à partir d'un matériau pulvérulent et d'enrobage du granulat dans un lit fluidisé avec un liant contenu dans un liquide de granulation, dans lequel le matériau pulvérulent est fluidisé au moins dans des domaines partiels de sa charge dans un dispositif à lit fluidisé par un courant gazeux insufflé par le bas au travers d'un fond perforé, et dans lequel le liquide de granulation est pulvérisé au-dessus du lit fluidisé dans des zones fluidisées du matériau, caractérisé en ce que le liquide de granulation est pulvérisé au moyen d'au moins un gicleur à jet laminaire essentiellement à contre-courant du courant gazeux formant le lit fluidisé, les gicleurs à jet laminaire se déplaçant au-dessus du lit fluidisé.

2. Procédé suivant la revendication 1, caractérisé en ce qu'au moins un gicleur à jet laminaire binaire à surpression, qui fonctionne avec une pression du gaz de pulvérisation de 2 à 6 bars, est utilisé pour le mélange extérieur.

3. Procédé suivant la revendication 1 ou 2, caractérisé en ce que l'on utilise plusieurs gicleurs à jet laminaire répartis uniformément au-dessus de la surface du lit fluidisé.

4. Procédé suivant l'une des revendications 1 à 3, caractérisé en ce que seuls des domaines partiels de la charge de matériau sont fluidisés et en ce que ces domaines partiels et les gicleurs à jet laminaire, en concordance avec ceux-ci, sont déplacés dans ou selon le cas, sur la charge de matériau.

5. Procédé suivant l'une quelconque des revendications 1 à 3, caractérisé en ce qu'essentiellement toute la charge de matériau dans le lit fluidisé est fluidisée et en ce que les gicleurs à jet laminaire sont déplacés au-dessus du lit fluidisé.

6. Procédé suivant l'une des revendications 1 - 5 pour le traitement d'un additif alimentaire contenant de la bacitracine zincique, caractérisé en ce que l'on travaille dans le dispositif à couche fluidisée avec une charge spécifique de 200 à 300 kg de matériau de départ par m² de surface de fond perforé, et en ce qu'on utilise comme liquide de granulation une solution aqueuse à 4 à 6% en poids de méthylcellulose.

7. Dispositif à lit fluidisé, comportant
un réservoir (2,6);
un fond perforé (4) disposé dans le réservoir (2) pour supporter le matériau pulvérulent;
un dispositif (12,14) disposé en dessous du fond perforé (4) pour amener le gaz de fluidisation au travers du fond perforé dans le matériau, et au moins un gicleur (26) disposé au-dessus du lit fluidisé en formation pour pulvériser le liquide de granulation,
ainsi que des moyens pour acheminer le liquide de granulation vers le au moins un gicleur (26),
caractérisé en ce que le au moins un gicleur (26) est un gicleur à jet laminaire tournant autour de l'axe central du réservoir, dont le sens de pulvérisation est essentiellement dirigé vers le bas, à contre-courant du courant gazeux formant le lit fluidisé.

8. Dispositif à lit fluidisé suivant la revendication 7, caractérisé en ce que le au moins un gicleur (26) est un gicleur à deux composants laminaire à surpression avec mélange extérieur.

9. Dispositif à lit fluidisé suivant la revendication 8, caractérisé en ce que le au moins un gicleur à jet laminaire (26) est conçu pour une pression du gaz de pulvérisation de 2 à 7 bars et pour une pression du liquide de granulation à pulvériser de 0,2 à 3,0 bars.

10. Dispositif à lit fluidisé suivant la revendication 8 ou 9, caractérisé en ce que le au moins un gicleur à jet laminaire (26) est conçu pour un débit de liquide, sur la base de l'eau, de 1,5 à 5,0 l/min.

11. Dispositif à lit fluidisé suivant au moins l'une des revendications 7 à 10 avec un réservoir (2,6) de section essentiellement circulaire, caractérisé en ce que le au moins un gicleur à jet laminaire (26) a une aire de pulvérisation essentiellement radiale, l'aire de pulvérisation, sur la base de l'axe central vertical (22) du réservoir, ne s'étendant que d'un seul côté de cet axe, plus ou moins le long d'un jet radial et le gicleur (26) tournant autour de l'axe central du réservoir.

12. Dispositif à lit fluidisé suivant la revendication 11, caractérisé en ce que plusieurs gicleurs à jet laminaire (26), de préférence 6-12 gicleurs à jet laminaire, sont répartis régulièrement sur la circonférence du réservoir (2,6).

13. Dispositif à lit fluidisé suivant la revendication 11 ou 12, caractérisé en ce que les gicleurs à jet laminaire (26) sont fixés au moyen de bras (24) sur un arbre de rotation central (22) et le cas échéant l'amenée du liquide de granulation aux gicleurs à jet laminaire (26) est prévue par l'arbre de rotation (22) creux et les bras (24).

14. Dispositif à lit fluidisé suivant l'une des revendications 11 à 13, caractérisé en ce qu'une plaque rotative pourvue de fentes essentiellement radiales d'arrivée d'air, qui peut tourner en concordance avec les gicleurs à jet laminaire, est disposée sous le fond perforé.

15. Dispositif à lit fluidisé suivant l'une des revendications 7 à 10 pourvu d'un réservoir de section essentiellement circulaire, caractérisé en ce que plusieurs gicleurs à jet laminaire ayant un champ de pulvérisation essentiellement radial sont répartis à distance à peu près égale sur la circonférence du réservoir.

16. Dispositif à lit fluidisé suivant la revendication 15, caractérisé en ce que 6 à 12 gicleurs à jet laminaire sont prévus.

17. Dispositif à lit fluidisé suivant l'une des revendications 12 à 16, caractérisé en ce que la surface du lit fluidisé couverte à chaque instant par les gicleurs à jet laminaire représente environ 10 à 25% de la surface totale du lit fluidisé.

18. Dispositif à lit fluidisé suivant l'une des revendications 12 à 17, caractérisé en ce que la surface du lit fluidisé couverte par un gicleur à jet laminaire est de 150 à 750 cm², de préférence de 600 - 700 cm².

19. Utilisation d'un dispositif à lit fluidisé suivant l'une des revendications 7 - 18 pour la fabrication d'un granulat à partir d'un matériau pulvérulent et l'enrobage d'un granulat avec un liant contenu dans un liquide de granulation.

20. Utilisation d'un dispositif à lit fluidisé suivant l'une des revendications 7 - 18 pour la fabrication d'un granulat à partir d'un additif alimentaire contenant de la bacitracine zincique.
